# EUROPÄISCHE PATENTANMELDUNG

(11) **EP 0 823 824 A2**
(43) Veröffentlichungstag der Anmeldung: **11.02.1998**
(21) Anmeldenummer: 97112911.9
(22) Anmeldetag: 26.07.1997
(51) Int. Cl.: H04N 9/64, H04N 11/16

(54) **Fernsehempfänger mit einer Zeilenverzögerungsleitung im Farbkanal**

(30) Priorität: 08.08.1996 DE 19632018; 02.11.1996 DE 19645245
(71) Anmelder: DEUTSCHE THOMSON-BRANDT GMBH, 78048 Villingen-Schwenningen (DE)
(72) Erfinder: Sowig, Helmut, 78052 Villingen-Schwenningen (DE)

(57) **Zusammenfassung**

In einem Farbfernsehempfänger können durch die Signalwiederholung mit der Zeilenverzögerungsleitung insbesondere bei Vorliegen von Spitzenweiß mit 100% Amplitude Spannungsüberhöhungen auftreten, die die Wirkungsweise bekannter Kontrastexpander stören und die Bildwiedergabe verschlechtern.

Aufgabe ist es, derartige Spannungsüberhöhungen aufgrund der Wirkungsweise der Zeilenverzögerungsleitung zu verringern.

Jeweils der Verstärkungsfaktor einer Kombinationsstufe (4, 9) des Dekoders wird so gesteuert, daß die Amplitude ihrer Ausgangsspannung (B-Yout, R-Yout)verringert oder erhöht wird.

## Beschreibung

Die Erfindung geht aus von einem Fernsehempfänger mit einer Zeilenverzögerungsleitung im Farbkanal gemäß dem Oberbegriff des Anspruchs 1.

In Fernsehempfängern werden zunehmend sogenannte Kontrastexpander eingesetzt. Diese dienen dazu, bei Signalen kleiner Amplitude die Verstärkung und den Kontrast zu erhöhen und dadurch eine subjektiv bessere Bildwiedergabe zu erzielen. Derartige Kontrastexpander können auch bei verschiedenen Signalquellen oder unterschiedlich stark durchmodulierten Sendern Pegelunterschiede ausgleichen und die Bildwiedergabe subjektiv verbessern. Eine derartige Signalbeeinflussung kann in der Videoebene, innerhalb des FBAS-, YUV-Signals oder bei den RGB-Signalen erfolgen. Im allgemeinen wird die Amplitude der RGB-Signale ausgewertet, und in Abhängigkeit davon werden Verstärkung und Kontrast in der jeweils gewünschten Weise beeinflußt.

Es ist bekannt, daß bei bestimmten Signalkonstellationen Amplituden auftreten, die die Werte für Spitzenweiß überschreiten, also einen Videopegel von mehr als 100% darstellen. Hierzu zählen beispielsweise Überschwinger, verursacht durch Frequenzganganhebungen oder Bildverbesserungsschaltungen sowie vertikale Farb/Weiß-Übergänge, bei denen der ersten Weißzeile nach dem Übergang noch eine Chromakomponente aus der PAL-Laufzeitleitung aufaddiert wird. Diese über 100% großen Signale können bei Einsatz eines Kontrastexpanders eine unerwünschte Kontrastreduzierung bewirken.

Der Erfindung liegt die Aufgabe zugrunde, eine Schaltung zu schaffen, bei der durch Chromakomponenten entstehende Signale von mehr als 100 % Amplitude weitestgehend vermieden werden.

Diese Aufgabe wird durch die im Anspruch 1 angegebene Erfindung gelöst. Vorteilhafte Weiterbildungen der Erfindung sind in den Unteransprüchen angegeben.

Die Erfindung besteht somit darin, daß jeweils die Verstärkungsfaktoren der Kombinationsstufen des Dekoders so gesteuert sind, daß die Amplituden ihrer Ausgangsspannungen verändert werden, wenn bestimmte Signalzustände in dem Luminanz- bzw. Farbkanal auftreten.

Gemäß einem Ausführungsbeispiel beruht die erfindungsgemäß Lösung auf folgenden Erkenntnissen und Überlegungen. Ein Farbfernsehempfänger enthält im Farbkanal entweder eine Verzögerungsleitung für eine Zeilendauer für das trägerfrequente Farbsignal oder - falls das Prinzip der Basisbandverzögerung angewandt wird - zwei Verzögerungsleitungen für je eine Zeilendauer, meist integriert in einem IC, für die demodulierten Farbdifferenzsignale. Diese Verzögerungsleitung bewirkt, daß jeweils ein Farbsignal einer Zeile n auch noch in der zeitlich folgenden Zeile n+1 an der Bildwiedergabe beteiligt ist. Es sei jetzt folgender, in der Praxis häufig auftretender Fall angenommen: Die Zeile n ist eine Zeile mit Farbanteil, z.B. eine blaue Zeile, und die Zeile n+1 ist durch einen Übergang in Vertikalrichtung von Farbe auf Schwarz/Weiß eine rein weiße Zeile mit 100 % Weiß, in der somit das Farbartsignal im Farbkanal, also z.B. die Signale R-Y und B-Y oder U und V, null ist. Am Ausgang der Zeilenverzögerungsleitung steht aber während der Zeile n+1 noch das Signal aus der Zeile n. Daher wird bei der Bildwiedergabe während der Zeile n+1 noch ein Farbsignal aus der Zeile n wirksam, das an sich in der rein weißen Zeile n+1 gar nicht empfangen wird. Dieses Signal, das sich bei der Matrizierung zu den RGB-Signalen zu den an sich richtigen Signalen für 100% Weiß addiert, erzeugt somit in unerwünschter Weise ein Signal mit mehr als 100% Amplitude, also ein sogenanntes Überweiß.

Durch die erfindungsgemäße Schaltung wird nun dieser Zustand an der Zeilenverzögerungsleitung detektiert und in dem beschriebenen Fall das störende Farbsignal am Ausgang der Zeilenverzögerungsleitung in der Zeile n+1 abgeschaltet. Durch die Erfindung werden also insbesondere Störungen im Bild durch Überweiß bei einem Übergang von Farbe auf Schwarz/Weiß von Zeile zu Zeile, also in Vertikalrichtung, beseitigt. Der schaltungstechnische Aufwand ist gering, weil die erfindungsgemäße Schaltung zusammen mit dem eigentlichen PAL-Dekoder in einem integrierten Schaltkreis realisiert werden kann.

Vorzugsweise ist bei einem PAL-Farbfernsehempfänger der Verstärkungsfaktor der Kombinationsstufen des Farbdekoders auf den Wert null gesteuert, wenn nur am Ausgang der Verzögerungsleitung ein Signal vorhanden ist.

Eine Weiterbildung der Erfindung besteht in folgendem: In den Kombinationsstufen der Basisband Verzögerungsleitungen, in der Regel je eine Addierstufe, werden die Farbdifferenzsignale aus zwei zeitlich aufeinanderfolgenden Zeilen n und n+1 von den Eingängen und Ausgängen der Zeilenverzögerungsleitungen addiert. Dadurch ergibt sich eine Verdopplung der Amplituden der Farbdifferenzsignale, die bei der Bemessung der Gesamtschaltung berücksichtigt wird. Auch beim im farbträgerfrequenten Bereich arbeitenden Laufzeitdecoder werden die Amplituden der trägerfrequenten Farbdifferenzsignale verdoppelt, da das direkte und das verzögerte Farbartsignal addiert bzw. subtrahiert werden. Dadurch ergeben sich aufgrund der PAL-Umschaltung die trägerfrequenten Signale +2U und ±2V. Bei einem Schwarz-Weiß/Farb-Sprung zwischen der Zeile n und der Zeile n+1 ist in der Zeile n die Farbträgeramplitude null und hat in der Zeile n+1 ein bestimmten, von der jeweiligen Farbsättigung abhängigen Wert. Das bedeutet, daß in der Zeile n+1 an der Addierstufe und an der Subtrahierstufe nicht zwei Farbträger aus zwei zeitlich aufeinanderfolgenden Zeilen verfügbar sind und somit die genannte Amplitudenerhöhung nicht auftritt. Deshalb wird gemäß der Weiterbildung der Erfindung in einem derartigen Fall die Amplitude des Signals am Ausgang der Kombinationsstufen um den Faktor 2, also um 6 dB, verstärkt und somit die zu geringe Amplitude korrigiert.

Im Falle von SECAM liefert das zuvor beschriebene Verfahren aufgrund der zeilensequentiellen Übertragung der Farbdifferenzsignale leider nicht immer eindeutige Ergebnisse, sodaß die Anwendung auf PAL beschränkt werden muß. Eine vom Standard unabhängige Abhilfe schafft hier - entweder alternativ oder ergänzend zum zuvor genannten Verfahren - eine Abfrage des Luminanzsignals.

Unabhängig vom Farbstandard sind alle Fernsehnormen so ausgelegt, daß der als Weiß definierte Y-Pegel grundsätzlich von keiner Farbe überlagert ist. Es genügt daher im Luminanzsignalweg, z.B. hinter der Farbträgerfalle, die Amplitude des Luminanzsignals abzufragen und bei Erkennen von 100% Weiß das Farbsignal bzw. die Farbdifferenzsignale abzuschalten oder zumindest zu reduzieren.

Für die Weißerkennung läßt sich leicht ein Referenzwert durch Spitzen-gleichrichtung der üblicherweise vorhandenen Prüfzeilen ableiten. Falls eine Weißreferenz im Signal fehlt, muß eine feste Referenzspannung benutzt werden, die möglichst genau dem sonst tatsächlichen Weißwert entspricht (bzw. knapp unter dem zu erwartenden Weißwert liegt).

Um ein Ansprechen der Schaltung auf Überschwinger im Luminanzsignal zu vermeiden, können diese durch ein Tiefpaßtilter vor der Auswerteschaltung reduziert werden. Hierbei muß die zusätzliche Laufzeit des Luminanzsignals berücksichtigt werden.

Die Hauptaufgabe der Erfindung ist es, einen Fernsehempfänger zu schaffen, bei dem durch Chromakomponenten entstehende Signale von mehr als 100 % Amplitude weitestgehend vermieden werden.

Diese Aufgabe wird durch einen Fernsehempfänger nach Anspruch 9 gelöst.

Der erfindungsgemäße Fernsehempfänger weist entsprechende Vorteile auf, die im Zusammenhang mit der erfindungsgemäßen Schaltung bereits beschrieben worden sind.

Schließlich ist es Aufgabe der Erfindung, ein Verfahren anzugeben, mit dem durch Chromakomponenten entstehende Signale von mehr als 100 % Amplitude vermieden werden.

Diese Aufgabe wird durch ein Verfahren nach Anspruch 10 gelöst. Vorteilhafte Weiterbildungen des erfindungsgemäßen Verfahrens sind Gegenstand der Unteransprüche 11 bis 13.

Die Erfindung wird im folgenden anhand der Zeichnung näher erläutert. Darin zeigen
- Fig. 1: das Blockschaltbild für einen PAL-Decoder mit videofrequenter Mittelung der Farbdifferenzsignale,
- Fig. 2: ein Diagramm zur Erläuterung der Wirkungsweise der Schaltung nach Fig. 1,
- Fig. 3: ein Blockschaltbild eines PAL-Farbdecoders, auch Laufzeitdecoder genannt, mit Addition und Subtraktion der empfangenen modulierten Farbträger aus zwei zeitlich aufeinanderfolgenden Zeilen,
- Fig. 4: ein Diagramm zur Erläuterung der Wirkungsweise der Schaltung nach Fig. 3,
- Fig. 5: ein Blockschaltbild eines Decoders, der mit einer Auswerteschaltung im Luminanzkanal versehen ist,
- Fig. 6: ein Diagramm zur Erläuterung der Wirkungsweise der Schaltung nach Fig. 5,
- Fig. 7: Signalverläufe für ein bestimmtes Bild bei einem in bekannter Weise arbeitenden Farbdecoder und
- Fig. 8: die Signalverläufe für denselben Fall wie in Fig. 7 bei dem erfindungsgemäß arbeitenden Farbdecoder.

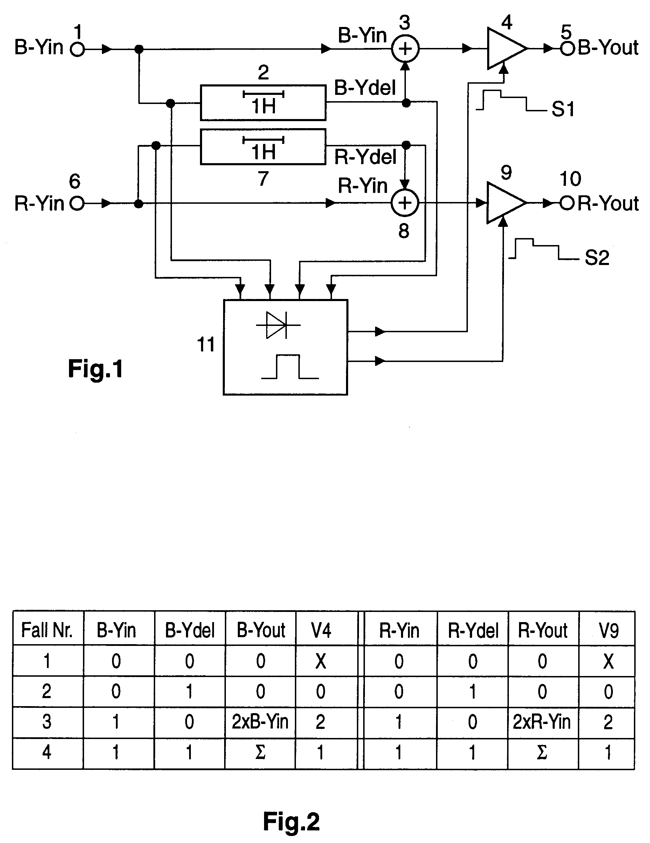

In Fig. 1 gelangt das durch Demodulation des modulierten Farbträgers F gewonnene videofrequente Farbdifferenzsignal B-Yin von der Klemme 1 einmal direkt und einmal über die im Basisband arbeitende Zeilenverzögerungsleitung 2 als verzögertes Signal B-Ydel auf die Eingänge der Addierstufe 3. Das Ausgangssignal der Addierstufe 3 gelangt auf den Eingang des steuerbaren Verstärkers 4, der an der Klemme 5 das über zwei zeitlich aufeinanderfolgende Zeilen gemittelte Signal B-Yout liefert.

Das ebenfalls aus dem modulierten Farbträger durch Demodulation gewonnene Farbdifferenzsignal R-Yin gelangt in gleicher Weise von der Klemme 6 einmal direkt und einmal über die Zeilenverzögerungsleitung 7 als verzögertes Signal R-Ydel auf die Eingänge der Addierstufe 8, deren Ausgangsspannung auf den Eingang des steuerbaren Verstärkers 9 gelangt. Dieser liefert entsprechend an der Klemme 10 das über zwei zeitlich aufeinanderfolgende Zeilen gemittelte Signal R-Yout.
Die Eingänge und die Ausgänge der beiden Verzögerungsleitungen 2, 7 sind außerdem an Eingänge der Detektor- und der Steuerschaltung 11 angeschlossen. Die Schaltung 11 detektiert, wie im folgenden näher beschrieben, ob Signale an den Eingängen und Ausgängen der Verzögerungsleitungen 2, 7 vorhanden sind oder nicht und erzeugt daraufhin Steuerimpulse S1 und S2, die die Verstärkung der Verstärker 4, 9 in Abhängigkeit von der Konstellation der Farbdifferenzsignale auf drei verschiedene Werte steuern.

Fig. 2 zeigt die in Fig. 1 auftretenden Farbdifferenzsignale für vier voneinander unabhängige Konstellationen der Farbdifferenzsignale an den Eingängen und Ausgängen der Verzögerungsleitungen 2, 7 und die jeweils von der Steuerschaltung 11 eingestellte Verstärkung V4 und V9 der Verstärker 4 und 9. Dabei ist angenommen, daß die Verstärker 4 und 9 bei normaler, bekannter Wirkungsweise der Schaltung den Verstärkungsfaktor 1 haben. Im folgenden werden die vier in Fig. 2 dargestellten Fälle nacheinander beschrieben. Da es sich um analoge Signale handelt, bedeutet im folgendem "0" = kein Signal und "1" = Signal vorhanden. Das Symbol "x" bedeutet, daß der Verstärkungsfaktor V4 oder V9 beliebig sein kann. Er hat vorzugsweise den Normalwert von 1 oder dem Wert von 0, um unnötige Störungen aus dem Chromakanal zu vermeiden.

### Fall Nr. 1

Die Signale B-Yin und B-Ydel sind 0, z.B. wenn die laufende und die zeitlich vorangehende Zeile eine Schwarz/Weiß-Zeile ist. V4 hat den Normalwert 1 kann aber beliebig sein, und B-Yout ist ebenfalls 0. Die bekannte Wirkungsweise der Schaltung nach Fig. 1 wird dann durch die Steuerschaltung 11 nicht beeinflußt.

### Fall Nr. 2

Das Signal B-Yin ist 0, das Signal B-Ydel aus der zeitlich vorangehenden Zeile ist jedoch vorhanden. Die Addierstufe 3 würde dann an ihrem Ausgang das Signal B-Ydel liefern, obwohl in der laufenden Zeile ein Farbdifferenzsignal B-Y nicht vorliegt. Es kann daher in diesem Fall zu dem eingangs beschriebenen Überweiß kommen. Die Signalkonstellation B-Yin = 0 und B-Ydel = 1 wird nun in der Steuerschaltung 11 dedektiert. Daraus wird ein Steuerimpuls S1 gewonnen, der die Verstärkung V4 des Verstärkers 4 auf 0 steuert, also den Signalweg unterbricht. Deshalb wird in erwünschter Weise das in diesem Fall störende Signal B-Ydel unterdrückt und entsprechend B-Yin = 0 auch B-Yout = 0.

### Fall Nr. 3

In der laufenden Zeile ist ein Signal B-Yin vorhanden, während das verzögerte Signal B-Ydel aus der vorangehenden Zeile nicht vorhanden ist. Die Bemessung der Schaltung nach Fig. 1 beruht aber auf der Annahme, daß in den Addierstufen 3 und 8 durch die Kombination der Signale aus zwei zeitlich aufeinanderfolgenden Zeilen eine Verdoppelung der Signalamplitude auftritt. Diese Verdoppelung der Amplitude des in der laufenden Zeile vorhandenen Signals B-Yin kann jedoch in diesem Fall nicht auftreten, weil das um eine Zeilendauer verzögerte Signal B-Ydel fehlt. Die Signalkonstellation gemäß Fall 3 wird nun in der Steuerschaltung 11 detektiert. Daraus wird ein Steuerimpuls S1 gewonnen, der den Verstärkungsfaktor V4 des Verstärkers 4 auf den Wert 2 steuert. Dadurch erhält das Ausgangssignal B-Yout den Wert 2 x B-Yin, so daß die doppelte Amplitude des Signals wieder hergestellt ist.

### Fall Nr. 4

B-Yin und B-Ydel sind beide vorhanden. Das ist gewissermaßen der "Normalfall" für die Schaltung nach Fig. 1. Daher wird in diesem Fall durch den Steuerimpuls S1 die Verstärkung V4 auf den Normalwert 1 gesteuert.

Im rechten Teil der Fig. 2 sind dieselben Verhältnisse für die Fälle Nr. 1 - 4 für das Signal R-Y dargestellt.

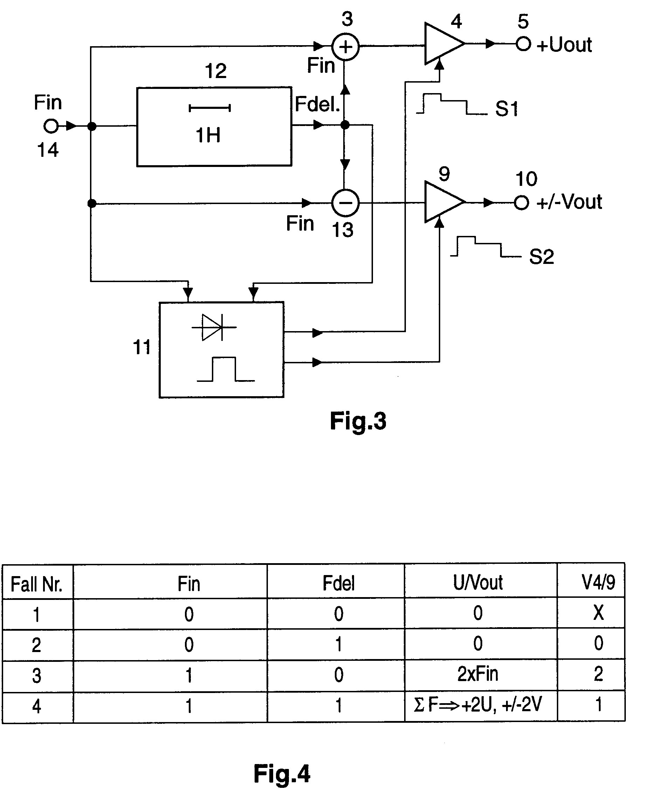

Fig. 3 zeigt eine Fig. 1 entsprechende Schaltung, die jedoch nach dem Prinzip des sogenannten PAL-Laufzeitdecoders im Weg des empfangenen modulierten Farbträgers F arbeitet. Der quadraturmodulierte Farbträger Fin wird von der Klemme 14 der Zeilenverzögerungsleitung 12 zugeführt, die an ihren Ausgang den um eine Zeilendauer verzögerten Farbträger Fdel liefert. Der unverzögerte Farbträger Fin und der verzögerte Farbträger Fdel werden den Eingängen der Addierstufe 3 und der Subtrahierstufe 13 zugeführt. In den Stufen 3, 13 wird unter Ausnutzung der zeilenfrequenten Phasenumschaltung des PAL-Farbträgers der Farbträger in seine beiden farbträgerfrequenten Komponenten U und V entsprechend den Achsen U und V aufgespalten. Der Verstärker 4 liefert somit an der Klemme 5 das der Achse U entsprechende farbträgerfrequente Signal Uout und der Verstärker 9 an der Klemme 10 entsprechend das von Zeile zu Zeile im Vorzeichen umgepolte farbträgerfrequente Signal +/-Vout. Bei normaler, bekannter Betriebsweise sind die Verstärkungsfaktoren der Verstärker 4, 9 gleich 1. Die soweit beschriebene Schaltung ist bekannt.

Anhand von Fig. 4 wird die Wirkungsweise dieser Schaltung wieder für vier voneinander unabhängige Fälle Nr. 1 - 4 für die verschiedenen Signalkonstellationen von Fin und Fdel beschrieben.

### Fall Nr. 1

Fin und Fdel sind beide 0, z.B. wenn die laufende Zeile und die zeitlich vorangehende Zeile eine Schwarz/Weiß-Zeile ist. Die Verstärkungsfaktoren V4 und V9 sind durch die Steuerschaltung 11 auf den Wert 1 eingestellt, können aber auch beliebige Werte haben. Da Fin = 0 und Fdel=0 ist, ist entsprechend das farbträgerfrequente Signal Uout = 0. Die bekannte Schaltung wird dann durch die Steuerschaltung 11 nicht beeinflußt.

### Fall Nr. 2

Fin ist = 0, z.B. bei einer Schwarz/Weiß-Zeile, Fdel aus der zeitlich vorangehenden Zeile ist jedoch vorhanden. Dadurch würde die Wiedergabe verfälscht, insbesondere ein Amplitudenfehler in den RGB-Signalen auftreten, weil in der laufenden Zeile mit Fin kein Farbträger vorliegt, dieser jedoch an den Eingängen der Addierstufe 3 und der Subtrahierstufe 13 durch den Farbträger Fdel aus der zeitlich vorangehenden Zeile vorgetäuscht würde. Diese Signalkonstellation wird in der Steuerschaltung 11 detektiert. Daraus wird ein Steuerimpuls S1 gewonnen, der die Verstärkungsfaktoren V4 und V9 der Verstärker 4 und 9 auf den Wert 0 steuert. Das störende Signal Fdel an den Eingängen der Addierstufe 3 und der Subtrahierstufe 13 wird also unterdrückt, und entsprechend dem Signalinhalt Fin der laufenden Zeile werden Uout und Vout = 0.

### Fall Nr. 3

In der laufenden Zeile liegt ein Farbträger Fin vor, während ein Farbträger Fdel aus der zeitlich vorangehenden Zeile nicht vorliegt. Die Bemessung der Schaltung nach Fig. 3 beruht auf einer Amplitudenverdoppelung in den Stufen 3, 13. Da aber der verzögerte Farbträger Fdel fehlt, tritt diese Amplitudenverdoppelung nicht auf, so daß in der laufenden Zeile eine Farbwiedergabe mit zu geringer Farbsättigung erfolgen würde. Diese Signalkonstellation wird wiederum in der Steuerschaltung 11 detektiert. Der daraus gewonnene Steuerimpuls S1 steuert die Verstärkungen V4 und V9 auf den Wert 2. Das Signal Fin wird somit in der Amplitude verdoppelt und somit die an sich nicht auftretende Amplitudenverdoppelung in den Stufen 3, 13 wieder hergestellt.

### Fall Nr. 4

Fin und Fdel sind beide vorhanden, die laufende Zeile und die vorangehende Zeile haben also Farbinhalt. Das ist wieder der Normalfall oder Idealfall für den Decoder gemäß Fig. 3. Es fehlt kein Signal, und in den Stufen 3, 13 tritt eine Verdoppelung der Signalamplitude auf. Die Werte V4 und V9 sind dann durch die Steuerschaltung 11 auf den Normalwert 1 gesteuert.

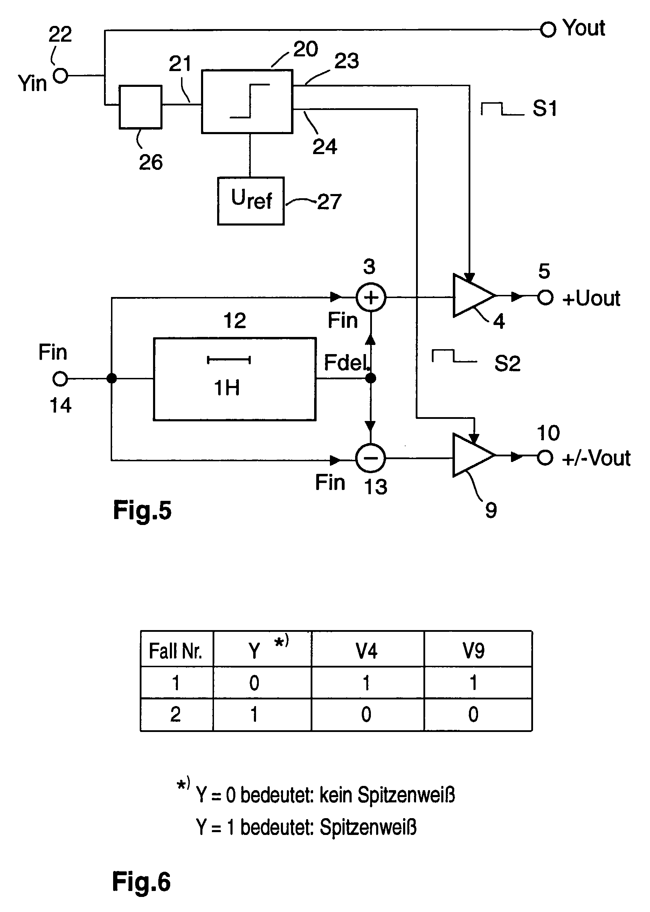

Fig. 5 zeigt ein alternatives Ausführungsbeispiel der Erfindung. Im Unterschied zu den beiden vorstehend beschriebenen Ausführungsbeispielen ist eine Schaltung 20 im Weg des Luminanzsignals Y angeordnet, die aus einem ersten Zustand in einen zweiten Zustand wechselt, wenn der Pegel des Luminanzsignals Yᵢₙ einen bestimmten Schwellenwert überschreitet. Dieser Schwellenwert ist ungefähr gleich dem Signalpegel, der Spitzenweiß entspricht, vorzugsweise jedoch etwas kleiner.

Die Schaltung 20 weist einen Eingang 21 auf, der mit einer Klemme 22 verbunden ist, an der das Luminanzsignal Yᵢₙ eingespeist wird. Zwei Ausgänge 23, 24 der Schaltung 20 sind jeweils mit Steuerelektroden der steuerbaren Verstärker 4 bzw. 9 verbunden.

Wenn der Pegel des Luminanzsignals Yᵢₙ unterhalb des Schwellenwertes der Schaltung 20 bleibt, dann gibt die Schaltung 20 an den Ausgängen 23, 24 erste Steuersignale S1 bzw. S2 an die Verstärker 4 bzw. 9 ab, so daß deren Verstärkungsfaktoren V4 bzw. V9 = 1 sind. Diese Situation entspricht dem ersten Zustand der Schaltung 20.

Wenn der Pegel des Yᵢₙ Signals den Schwellenwert der Schaltung 20 überschreitet, dann gibt die Schaltung 20 an den Ausgängen 23, 24 zweite Steuersignale S1 bzw. S2 an die Verstärker 4 bzw. 9 ab, so daß deren Verstärkungsfaktoren V4 bzw. V9 = 0 sind. Diese Situation entspricht dem zweiten Zustand der Schaltung 20. Auf diese Weise ist sichergestellt, daß kein Farbsignal abgegeben wird, wenn der Pegel des Luminanzsignals Yᵢₙ Spitzenweiß entspricht. Das eingangs beschriebene Überweiß kann somit nicht auftreten.

Um zu verhindern, daß die Detektor- und Auswerteschaltung 20 auf Überschwinger im Luminanzsignal anspricht, ist zwischen der Klemme 22 und dem Eingang 21 ein Tiefpaßfilter 26 angeordnet, das kurzzeitige Schwankungen im Luminanzsignal herausfiltert.

Die Weißreferenz wird bei dem vorliegenden Ausführungsbeispiel durch eine Referenzspannungsquelle 27 zur Verfügung gestellt. Die Weißreferenz kann auch durch Spitzengleichrichtung von Prüfzeilen des Fernsehbildes erzeugt werden.

Diese Funktionsweise ist in Fig. 6 noch einmal in Gestalt einer Tabelle zusammen gefaßt, wobei Yᵢₙ = 0 bedeutet, daß der Pegel des Luminanzsignal Yᵢₙ unterhalb des Schwellenwertes der Schaltung 20 liegt und Yᵢₙ = 1, daß dieser Schwellenwert überschritten worden ist.

Im Unterschied zu den beiden vorstehend beschriebenen Schaltungen 11 ist es mit der Schaltung 20 nicht möglich, die Verstärkungsfaktoren V4 und V9 bei einem Wechsel von einer Schwarz-Weiß-Zeile zu einer Farbzeile zu verdoppeln. Wie eingangs beschrieben, liegt in diesen Fallen nur das Farbsignal Fin vor, während das verzögerte Farbsignal Fdel fehlt. Bei dieser Konstellation wird der Schwellenwert im Luminanzkanal nicht überschritten, so daß die Schaltung nicht reagiert.

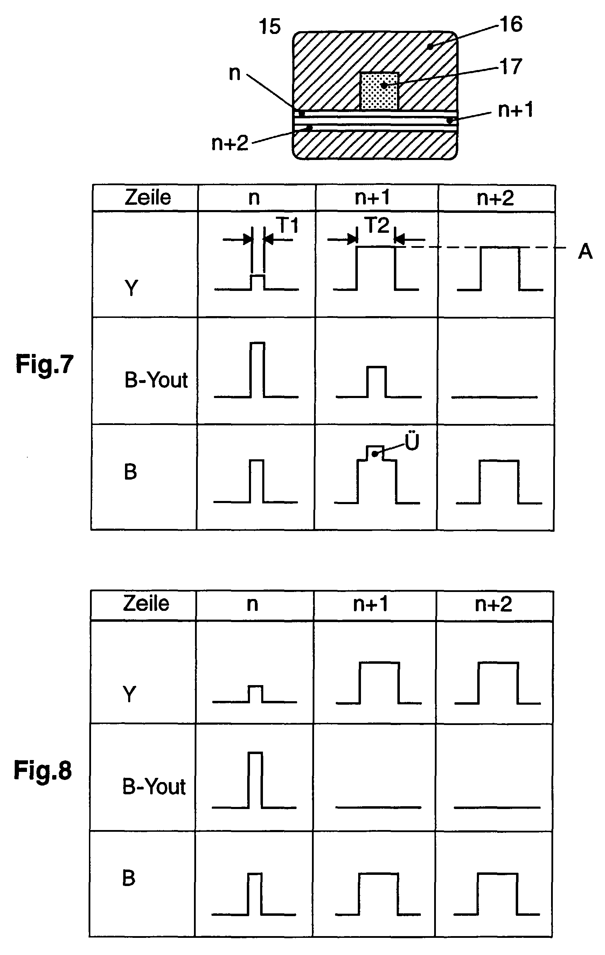

Fig. 7 und 8 zeigen die Wirkungsweise für ein spezielles Bild. Die folgende Beschreibung dieses Spezialfalls erfolgt anhand der Fig. 1, gilt aber sinngemäß ebenso für die Schaltung nach Fig. 3 und Fig. 5. Das Bild besteht aus einem schwarzen Hintergrund 16, einer blauen Fläche 17 in der Mitte des Bildes und einigen weißen Zeilen n+1, n+2... unmittelbar im Anschluß an die blaue Fläche 17.

In Fig. 7 ist die Zeile n die letzte Zeile der blauen Fläche 17. Die Zeit T1 entspricht der Breite oder Dauer der blauen Fläche 17 und die Zeit T2 der gesamten Zeilenhinlaufzeit oder eines Teiles davon. In der Zeile n hat das Signal Y während der Zeit T1 den der blauen Fläche 17 entsprechenden Wert und das Signal B-Yout den der Farbsättigung der Fläche 17 entsprechenden Wert. Daraus ergibt sich nach der Matrixierung zwischen Y und B-Yout das blaue Farbsignal B mit der dargestellten Amplitude. In der ersten weißen Zeile n+1 nach dem Ende der blauen Fläche 17 hat Y die dem Spitzenweiß entsprechende Amplitude A. Da in der rein weißen Zeile n+1 keine Farbe vorhanden ist, fehlt das Signal B-Yin vom Eingang der Leitung 2, ist jedoch als verzögertes Signal B-Ydel am Eingang der Addierstufe 3 noch vorhanden. Dadurch ergibt sich für B-Yout in der Zeile n+1 die halbe Amplitude gegenüber der Zeile, obwohl in dieser Zeile kein Farbsignal empfangen wird und somit für die Bildwiedergabe an sich nicht vorliegen darf. Dadurch ergibt sich im Signal B durch Matrizierung von Y und B-Yout die Spannungsüberhöhung Ü, die den 100 % entsprechenden Weißwert überschreitet und somit bei Einsatz einer automatischen Kontrastregelschaltung (eines Kontrastexpanders), zu einer Reduzierung des Bildkontrastes führen würde. In der nächsten weißen Zeile n+2 ist das Signal B-Y weder am Eingang noch am Ausgang der Leitung 2 vorhanden, so daß hier wieder eine richtige Bildwiedergabe erfolgt.

Fig. 8 zeigt Signale für dasselbe Bild wie in Fig. 7, jedoch mit Anwendung der neuen Lösung. Während der Zeile n sind die Verhältnisse gegenüber Fig. 7 unverändert. In der Zeile n+1 detektiert die Steuerschaltung 11, daß das verzögerte Signal B-Ydel aus der Zeile n am Ausgang der Leitung 2 vorhanden ist, daß aber am Eingang der Leitung 2 wegen der vorliegenden weißen Zeile kein Signal vorhanden ist. Deshalb wird das Signal B-Yout in der Zeile n+1 abgeschaltet, also nicht verwertet, indem der Verstärkungsfaktor der Stufe 4 auf Null gesteuert wird. Da nunmehr in der Zeile n+1, in der keine Farbübertragung erfolgt, auch in erwünschter Weise kein Signal B-Yout vorhanden ist, entsteht auch nicht die störende Spannungsüberhöhung Ü gemäß Fig. 7. Die Zeile n+2, in der weder ein unverzögertes noch ein verzögertes Farbsignal vorhanden ist, ist gegenüber Fig. 7 unverändert.

Grundsätzlich ist es möglich, für die Verstärkungsfaktoren V4 bzw. V9 andere als die oben angegebenen Werte zu wählen. Es ist auch möglich, daß die Verstärkungsfaktoren zu einem Zeitpunkt unterschiedliche Werte annehmen, d.h. daß die Auswerteschaltung 11 bzw. 20 die Verstärkungsfaktoren unabhängig voneinander verändert.

## Patentansprüche

1. Schaltung für einen Fernsehempfänger mit einer Zeilenverzögerungsleitung (2, 7, 12) im Farbkanal, bei dem das unverzögerte videofrequente oder farbträgerfrequente Signal vom Eingang der Leitung und das verzögerte Signal vom Ausgang der Leitung an die Eingänge von Kombinationsstufen (4, 5) angelegt sind, deren Ausgangsspannungen (B-Yout, R-Yout) dem Farbkanal zugeführt werden, **dadurch gekennzeichnet**, daß die Verstärkungsfaktoren (V4, V9) der Kombinationsstufen steuerbar sind und daß eine Auswerteschaltung (11, 20) vorgesehen ist, die jeweils die Verstärkungsfaktoren (V4, V9) der Kombinationsstufen (4, 9) so gesteuert, daß die Amplituden ihrer Ausgangsspannungen (B-Yout, R-Yout; Uout, Vout) abhängig von bestimmten Signalzuständen in dem Luminanz- bzw. Farbkanal verändert werden.

2. Schaltung nach Anspruch 1, **dadurch gekennzeichnet**, daß die Auswerteschaltung (11) mit dem Eingang und dem Ausgang der Zeilenverzögerungsleitung (2, 7, 12) verbunden ist.

3. Schaltung, nach Anspruch 2, **dadurch gekennzeichnet**, daß die Auswerteschaltung (11) Mittel umfaßt, die die Verstärkungsfaktoren (V4, V9) jeweils auf einen ersten Wert steuern, wenn sowohl an dem Eingang als auch an dem Ausgang der Zeilenverzögerungsleitung (2, 7, 12) ein Signal vorhanden ist, und die wenigstens einen der Verstärkungsfaktoren (V4, V9) auf einen im Vergleich zu dem ersten Wert kleineren zweiten Wert steuern, wenn nur am Ausgang der Zeilenverzögerungsleitung (2, 7, 12) ein Signal vorhanden ist.

4. Schaltung nach Anspruch 3, **dadurch gekennzeichnet**, daß wenigstens einer der zweiten Werte der Verstärkungsfaktoren (V4, V9) gleich Null ist.

5. Schaltung nach Anspruch 2, **dadurch gekennzeichnet**, daß die Auswerteschaltung (11) Mittel aufweist, um wenigstens einen der Verstärkungsfaktoren (V4, V9) zu erhöhen, wenn am Ausgang der Leitung kein Signal vorhanden ist.

6. Schaltung nach Anspruch 1, **dadurch gekennzeichnet**, daß die Auswerteschaltung (20) im Luminanzkanal angeordnet ist.

7. Schaltung nach Anspruch 6, **dadurch gekennzeichnet**, daß die Auswerteschaltung (20) Mittel aufweist, um die Verstärkungsfaktoren (V4, V9) jeweils auf einen ersten Wert zu steuern, wenn in der Luminanzleitung ein Signalpegel auftritt, der unter einem bestimmten Schwellenwert liegt, und um wenigstens einen der Verstärkungsfaktoren (V4, V9) auf einen im Vergleich zu dem ersten Wert kleineren zweiten Wert zu steuern, wenn in der Luminanzleitung ein Signalpegel auftritt, der über dem bestimmten Schwellenwert liegt.

8. Schaltung nach Anspruch 7, **dadurch gekennzeichnet**, daß wenigstens einer der zweiten Werte der Verstärkungsfaktoren (V4, V9) gleich Null ist.

9. Fernsehempfänger, **dadurch gekennzeichnet**, daß er mit einer Schaltung gemäß einem der vorstehenden Ansprüche ausgerüstet ist.

10. Verfahren zur Steuerung von Verstärkern (4, 9) in den Kombinationsstufen einer Farbdekoderschaltung gemäß dem eine Auswerteschaltung (11, 20) feststellt, ob vorbestimmte Signalzustände in dem Luminanz- oder Farbkanal vorliegen und hiervon abhängig die Verstärkungfaktoren (V4, V9) der Verstärker (4, 9) verändert.

11. Verfahren nach Anspruch 10, **dadurch gekennzeichnet**, daß bei einem PAL-Fernsehempfänger der Verstärkungsfaktor erhöht wird, wenn am Ausgang der Zeilenverzögerungsleitung kein Signal vorhanden ist.

12. Verfahren nach Anspruch 10, **dadurch gekennzeichnet**, daß die Verstärkungsfaktoren (V4, V9) jeweils auf erste Werte gesteuert werden, wenn die Auswerteschaltung (11) feststellt, daß sowohl an dem Eingang als auch an dem Ausgang der Zeilenverzögerungsleitung (2, 7, 12) ein Signal vorhanden ist, und daß wenigstens einer der Verstärkungsfaktoren (V4, V9) auf einen im Vergleich zu dem ersten Wert kleineren zweiten Wert gesteuert wird, wenn nur am Ausgang der Zeilenverzögerungsleitung (2, 7, 12) ein Signal vorhanden ist.

13. Verfahren nach Anspruch 11, **dadurch gekennzeichnet**, daß die Verstärkungsfaktoren (V4, V9) jeweils auf erste Werte gesteuert werden, wenn in der Luminanzleitung ein Signalpegel auftritt, der unter einem bestimmten Schwellenwert liegt und daß wenigstens einer der Verstärkungsfaktoren (V4, V9) auf einen im Vergleich zu dem ersten Wert kleineren zweiten Wert gesteuert wird, wenn in der Luminanzleitung ein Signalpegel auftritt, der über dem bestimmten Schwellenwert liegt.
